# EUROPEAN PATENT SPECIFICATION

(11) **EP 0 589 025 B1**
(45) Date of publication and mention of the grant of the patent: **14.02.1996**
(21) Application number: 93908915.7
(22) Date of filing: 06.04.1993
(51) Int. Cl.: C04B 26/12, C03C 25/02

(54) **A METHOD FOR ACCELERATING THE HARDENING OF MINERAL WOOL IMPREGNATED WITH MELAMINE BINDERS IN A MICROWAVE OVEN**
Verfahren zur Aushärtungsbeschleunigung von mit Melaminbindemittel durchtrankten Mineralwolle in Mikrowellenofen
PROCEDE ACCELERANT LE DURCISSEMENT DE LAINE MINERALE IMPREGNEE DE LIANTS A BASE DE MELAMINE, DANS UN FOUR A MICRO-ONDES

(30) Priority: 10.04.1992 DE 4212117
(43) Date of publication of application: 30.03.1994
(73) Proprietor: ISOVER SAINT-GOBAIN, F-92400 Courbevoie (FR)
(72) Inventor: AMANNT, Gerald, D-6942 Mörlenbach (DE); HOLSTEIN, Wolfgang, D-6313 Homberg (DE)
(74) Representative: Thiel, Christian, Dr. Dipl.-Chem.
(86) International application number: EP9300847
(87) International publication number: WO9321124

(56) References cited:
- DE-A- 2 756 848
- DE-A- 3 108 279
- FR-A- 2 503 015

## Description

The present invention relates to a method for accelerating the hardening of mineral wool impregnated with melamine binders and mineral wool products which are hardened in a microwave oven with the addition of resorcin to melamine binders as a hardening accelerator.

Mineral wool products are mixed with a binder to improve their inherent stability. This is generally done by spraying the raw material with a binder solution or dispersion in a fall shaft and then drying it. The mineral wool containing binder is then put into the desired shape, possibly surface-polished and then hardened. Hardening can be effected thermally by guiding the product through a kiln. Apart from the expenditure of energy this is problematic because mineral wool is a good insulator so that the thermal energy supplied penetrates into the interior of the product slowly and with difficulty, particularly in the case of large layer thicknesses. One therefore began using a microwave oven for hardening some time ago, which has proven useful for mineral wool products bound with melamine binders. The good penetration characteristics of microwaves in mineral wool products permit much more uniform heating, which furthermore essentially affects binder, and thus at the same time faster hardening.

Despite the advantages of hardening in a microwave oven over conventional thermal hardening, this method is still unsatisfactory in some points. Microwaves also have trouble penetrating into the interior of mineral wool products with large layer thicknesses so that there is also uneven heating in this method. Relatively long exposure times are therefore required to harden the core of thick mineral wool products sufficiently, although the edge areas have long since hardened more or less completely.

DE-B-27 56 848 discloses the addition of alkyl resorcinol to improve the water repellence of a melamine binder. This binder is used for insulating materials that are subjected to thermal hardening. This reference says nothing about this additive accelerating hardening. The expert also knows that hardening accelerators added in thermal methods generally have no such effect on hardening with microwaves.

It is also prior art to use resorcinol as a hardening component for binder containing phenol and urea in normal gas-fired drying kilns for chipboard production. The goal is to improve the formaldehyde emission of chipboard.

It is therefore fundamentally desirable to accelerate the hardening of melamine-bound mineral wool or mineral wool products in order to shorten the exposure time of the microwaves triggering hardening and thus achieve an improved temperature pattern, in particular in thick mineral wool layers. A shortened holding time in the microwave oven is furthermore desirable in the interests of increased productivity and lower energy consumption.

This goal is achieved with a method of the abovementioned type wherein the binder is mixed with a dihydroxy aromatic, preferably resorcin, in an amount of 1 to 15% by weight based on the binder before application to the mineral wool.

Dihydroxy aromatics are in particular dihydroxybenzenes and substituted dihydroxybenzenes whose substituents do not interfere with the reactions, for example alkyl-substituted benzenes. Preferred dihydroxybenzenes are resorcin and catechol, resorcin being particularly preferred and used by way of example in the further description.

The inventive method accelerates the hardening of mineral wool or mineral wool products impregnated with a melamine binder containing resorcin in a microwave oven by up to 20%.

Resorcinol is expediently added to the melamine binder in an amount of 2 to 8% by weight, advantageously 2 to 6%, in particular 3 to 5%. The resorcinol should be introduced into the binder immediately before application to the mineral wool, preferably via the sizing line. The reason for this is that resorcinol can react with the melamine binder to form insoluble products which impair impregnation of the mineral wool.

The binder containing resorcinol is introduced into the mineral wool in the customary way, preferably by spraying in a fall shaft. An aqueous solution or dispersion of the binder has proven to be particularly suitable and ecologically acceptable, in particular one with a binder content of 5 to 10% by weight, including the hardening accelerator. The mineral wool is then dried down to a residual water content, expediently 1 to 2% by weight of residual water based on the mineral wool.

The binders used are ones formed in the conventional way from melamine resin, phenolic resin and urea. The phenolic resin component expediently contains up to 20% by weight of formaldehyde which is in particular capable of reacting with the urea component. The binder can contain customary additives, for example oil, in an amount of about 0.2% by weight and a bonding agent in an amount of 0.1% by weight, in each case based on the dispersion.

A particularly preferred binder comprises 4 parts by weight of melamine resin, 3 parts by weight of phenolic resin with a formaldehyde content of 17% by weight, and 3 parts of urea, and is processed in 5 to 10% aqueous dispersion. The resorcin is added to this binder in the form of an aqueous solution.

The present invention also relates to mineral wool products of any kind produced using dihydroxy aromatics as a hardening accelerator for melamine binders in microwave hardening. The method is particularly suitable for producing heat-insulating covers as are used particularly for encasing heating tubes and hot-water pipes. These heat-insulating covers can be processed and laminated in the customary way to permit simple mounting on the objects to be insulated.

The invention shall be explained in more detail by the following example.

### Example

A binder (MB) was mixed from 4 parts by weight of melamine resin, 3 parts by weight of phenolic resin with a proportion of 17% by weight of free formaldehyde (R117), and 3 parts by weight of urea and converted into a 5% by weight aqueous dispersion. A 5% by weight resorcinol solution (R) was added to this dispersion via the sizing line in an amount so as to yield a hardener content of 3 or 5% by weight based on the binder. The binder dispersion containing resorcin was then immediately applied to freshly produced glass wool in a fall shaft.

The glass wool was then dried to a residual water content of 1 to 2% by weight. It could be processed into heat-insulating covers without trouble even after 3 weeks.

The glass wool impregnated by the above method was subjected after drying to a forming process, surface-polished and guided through a microwave oven. A perfectly hardened product was obtained that was at least equivalent in all points to a product obtained without a hardening accelerator, while the hardening time was shortened by 10 to 20%.

The following table compares the band speeds and cycle times in the production of melamine resin-bound heat-insulating covers made of glass wool with different thicknesses of the insulating layer with and without a hardening accelerator in the binder. In every case there is an appreciable shortening of the cycle time or increase in band speed. The column "Type" states the inside diameters and wall thicknesses of the hardened heat-insulating covers for piping.

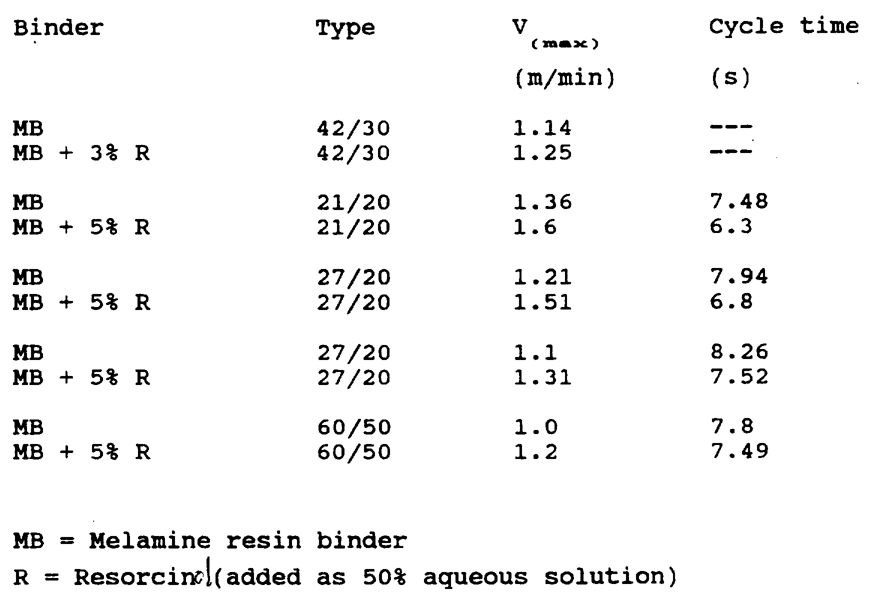

## Claims

1. A method for accelerating the hardening of mineral wool impregnated with melamine binder in a microwave oven, wherein the binder is mixed with at least one dihydroxy aromatic in an amount of 1 to 15% by weight based on the binder before application to the mineral wool.

2. The method of claim 1, wherein the binder is mixed with resorcinol in an amount of 3 to 5% by weight.

3. The method of claim 1 or 2, wherein the resorcinol is added to the binder immediately before application to the mineral wool.

4. The method of claim 3, wherein the resorcin is added to the binder in the sizing line.

5. The method of any of claims 1 to 4, wherein the binder containing resorcinol is applied to the mineral fibers in a fall shaft.

6. The method of any of claims 1 to 5, wherein the binder containing resorcinol is applied to the mineral fibers in an aqueous solution or dispersion.

7. The method of claim 6, wherein the aqueous binder solution or dispersion containing resorcin has a content of binder containing resorcinol of 5 to 10% by weight.

8. The method of any of claims 1 to 7, wherein a binder of melamine resin, phenolic resin and urea is used.

9. The method of claim 8, wherein the binder comprises 4 parts by weight of melamine resin, 3 parts of phenolic resin containing up to 20% by weight of free formaldehyde, and three parts of urea.

10. The method of any of the above claims, wherein customary additives are added to the binder.

## Patentansprüche

1. Verfahren zur Beschleunigung der Aushärtung von mit Melamin-Bindemittel imprägnierter Mineralwolle in einem Mikrowellenofen, worin das Bindemittel vor der Anwendung auf die Mineralwolle mit wenigstens einem Dihydroxyaromaten in einer Menge von 1 bis 15 Gew.-%, bezogen auf das Bindemittel, versetzt wird.

2. Verfahren nach Anspruch 1, worin das Bindemittel mit Resorzin in einer Menge von 3 bis 5 Gew.-% gemischt wird.

3. Verfahren nach Anspruch 1 oder 2, worin das Resorzin dem Bindemittel unmittelbar vor Anwendung auf die Mineralwolle zugesetzt wird.

4. Verfahren nach Anspruch 3, worin das Resorzin dem Bindemittel in der Encollage-Leitung zugesetzt wird.

5. Verfahren nach einem der Ansprüche 1 bis 4, worin das resorzinhaltige Bindemittel in einem Fallschacht auf die Mineralfasern aufgebracht wird.

6. Verfahren nach einem der Ansprüche 1 bis 5, worin das resorzinhaltige Bindemittel in wässriger Lösung oder Dispersion auf die Mineralfasern aufgebracht wird.

7. Verfahren nach Anspruch 6, worin die resorzinhaltige wässrige Bindemittellösung oder -dispersion einen Gehalt an resorzinhaltigem Bindemittel von 5 bis 10 Gew.-% hat.

8. Verfahren nach einem der Ansprüche 1 bis 7, worin ein Bindemittel aus Melaminharz, Phenolharz und Harnstoff verwandt wird.

9. Verfahren nach Anspruch 8, worin das Bindemittel 4 Gewichtsteile Melaminharz, 3 Teile Phenolharz mit bis zu 20 Gew.-% freiem Formaldehyd und 3 Teile Harnstoffe enthält.

10. Verfahren nach einem der vorstehenden Ansprüche, worin dem Bindemittel übliche Zusatzstoffe zugesetzt werden.

## Revendications

1. Procédé pour accélérer le durcissement de laine minérale imprégnée de liant à base de mélamine dans un four à micro-ondes, dans lequel le liant est mélangé avec au moins un produit dihydroxy-aromatique à raison de 1 à 15% en poids par rapport au liant avant l'application à la laine minérale.

2. Procédé selon la revendication 1, dans lequel le liant est mélangé avec du résorcinol à raison de 3 à 5% en poids.

3. Procédé selon la revendication 1 ou 2, dans lequel le résorcinol est ajouté au liant immédiatement avant l'application à la laine minérale.

4. Procédé selon la revendication 3, dans lequel le résorcinol est ajouté au liant dans la ligne de collage.

5. Procédé selon l'une quelconque des revendications 1 à 4, dans lequel le liant contenant le résorcinol est appliqué aux fibres minérales par gravité.

6. Procédé selon l'une quelconque des revendications 1 à 5, dans lequel le liant contenant le résorcinol est appliqué aux fibres minérales dans une solution ou dispersion aqueuse.

7. Procédé selon la revendication 6, dans lequel la solution ou la dispersion aqueuse de liant contenant le résorcinol possède une teneur en liant contenant le résorcinol de 5 à 10% en poids.

8. Procédé selon l'une quelconque des revendications 1 à 7, dans lequel un liant de résine mélamine, de résine phénolique et d'urée est utilisé.

9. Procédé selon la revendication 8, dans lequel le liant comprend 4 parties en poids de résine mélamine, 3 parties de résine phénolique contenant jusqu'à 20% en poids de formaldéhyde libre, et trois parties d'urée.

10. Procédé selon l'une quelconque des revendications ci-dessus, dans lequel des additifs courants sont ajoutés au liant.
